# EUROPÄISCHE PATENTSCHRIFT

(11) **EP 2 341 591 B1**
(45) Veröffentlichungstag und Bekanntmachung des Hinweises auf die Patenterteilung: **18.04.2018**
(21) Anmeldenummer: 10197060.6
(22) Anmeldetag: 27.12.2010
(51) Int. Cl.: H02G 3/32, H02G 13/00

(54) **Einstückige blitzstromtragfähige Bügelklemme**
Integrated lightning-resistant frame clamp
Etrier de serrage en une seule pièce pouvant supporter le courant de foudre

(30) Priorität: 05.01.2010 DE 202010000623 U; 21.04.2010 DE 202010005813 U
(43) Veröffentlichungstag der Anmeldung: 06.07.2011
(73) Patentinhaber: Dehn + Söhne GmbH + Co. KG, 92318 Neumarkt/Opf. (DE)
(72) Erfinder: Müller, Klaus-Peter, 92369 Sengenthal (DE); Pfister, Norbert, 92339 Beilngries (DE); Lang, Johanna, 92364 Deining (DE)
(74) Vertreter: Kruspig, Volkmar

(56) Entgegenhaltungen:
- EP-A1- 0 303 505
- EP-A2- 0 045 343
- DE-U- 1 687 337
- DE-U- 1 997 351
- US-A1- 2002 112 874

## Beschreibung

Die Erfindung betrifft einstückige blitzstromtragfähige Bügelklemme, bestehend aus einem Klemmbereich und einer Anschlussfläche mit mindestens einer Bohrung, wobei der Klemmbereich im Wesentlichen der Kontur des zu klemmenden Leiters, insbesondere eines Seiles eines Absturzsicherungssystems entspricht und sich die Anschlussfläche radial vom Klemmbereich weg erstreckt sowie weiterhin die Anschlussfläche zwei übereinander liegende Teilflächen umfasst, die voneinander einen Abstand aufweisen, um einerseits den zu klemmenden Leiter einzuführen sowie andererseits mittels Spannschraube oder Spannbolzen oder dergleichen Befestigungsmittel den Leiter im Klemmbereich zu fixieren, gemäß Oberbegriff des Anspruchs 1.

Gattungsbildende Bügelklemmen oder Klemmschuhe gehören zum Stand der Technik und sind beispielsweise aus dem Produktkatalog 2007 der Firma DEHN + SÖHNE GmbH + Co KG, Artikel-Nr. 345008, 345010 und 345087 bekannt.

Bei diesen Klemmen wird von einem einstückigen metallischen Teil ausgegangen, welches im Klemmbereich einen Rundungsabschnitt besitzt. Eine untere, erste Teilfläche der zu bildenden Anschlussfläche geht in den Radius des Klemmbereichs kontinuierlich über, wobei der Übergang hin zu einer zweiten Teilfläche der Anschlussfläche über eine Abwinklung vollzogen wird. Bei einer derartigen Ausführung der Umschließung des Leiters ist die Möglichkeit ausgeschlossen, dass ein Seilgleiter oder ein Seilschlitten über den Klemmbereich hinweg bewegt werden kann. Auch verhindert die aus den Gründen der Stromtragfähigkeit sehr eng am Klemmbereich angeordnete Bohrung zur Aufnahme eines Anschlussmittels das gewünschte Bewegen eines Seilgleiters bzw. Seilschlittens. Aus den vorstehend genannten Gründen ist es gemäß dem Stand der Technik erforderlich, entweder die Blitzschutzklemme am Absturzsicherungssystem zu lösen oder eine Öffnung des Seilgleiters oder Seilschlittens vorzunehmen, was jedoch mit zusätzlichem Aufwand verbunden und unter dem gewünschten Sicherheitsaspekt nachteilig ist. Weiterer Stand der Technik wird in US2002112874 offenbart. Aus dem Vorgenannten ist es daher Aufgabe der Erfindung, eine weiterentwickelte einstückige blitzstromtragfähige Bügelklemme, bestehend aus einem Klemmbereich und einer Anschlussfläche anzugeben, die zum einen die notwendige Stromtragfähigkeit besitzt und die zum anderen eine ungehinderte Bewegung eines Seilgleiters oder eines Seilschlittens eines Absturzsicherungssystems ermöglicht.
Die Lösung der Aufgabe der Erfindung erfolgt durch die Merkmalskombination nach Anspruch 1, wobei die Unteransprüche mindestens zweckmäßige Ausgestaltungen und Weiterbildungen darstellen.
Es wird demnach von einer einstückigen, blitzstromtragfähigen Bügelklemme, bestehend aus einem Klemmbereich und einer Anschlussfläche mit mindestens einer Bohrung ausgegangen. Der Klemmbereich folgt im Wesentlichen der Kontur des zu klemmenden Leiters, hier insbesondere eines Seiles eines Absturzsicherungssystems, das blitzschutztechnisch eingebunden ist. Die Anschlussfläche erstreckt sich radial vom Klemmbereich weg, wobei die Anschlussfläche zwei übereinander liegende Teilflächen umfasst, die voneinander einen Abstand aufweisen, um einerseits den zu klemmenden Leiter einzuführen sowie andererseits mittels Spannschraube oder Spannbolzen oder dergleichen Mittel den Leiter im Klemmbereich zu fixieren. Über die Spannschraube oder den Spannbolzen kann dann auch gleichzeitig ein Anschluss an das Blitzschutzsystem z.B. mittels eines entsprechenden Kabelschuhs vorgenommen werden.

Im montierten Zustand ist an der Bügelklemme eine bevorzugt flexible Blitzstromleitung zur elektrischen Verbindung bzw. Kontaktierung des Seils der Absturzsicherung mit einer Blitzschutzeinrichtung vorhanden. Es ist hierdurch der gewünschte elektrische Kontakt zwischen dem Seil der Absturzsicherung und dem Blitzschutzsystem gegeben.

Erfindungsgemäß ist der Klemmbereich zum Umschließen des Leiters einschließlich eines jeweiligen Übergangs zu den Teilflächen der Anschlussfläche symmetrisch ausgebildet.

Diese symmetrische Ausführung der Leiter oder Seilumschließung ermöglicht es, einen Seilgleiter oder Seilschlitten ungehindert über den Klemmbereich zu bewegen. Mithin muss der Seilgleiter oder Seilschlitten im Bereich der Bügelklemme nicht geöffnet werden.

Darüber hinaus ist zwischen der mindestens einen Bohrung in der Anschlussfläche respektive in den beiden Teilflächen, welche die Anschlussfläche bilden, und dem Übergang ein radialer Mindestabstand vorgesehen, der das n-fache des Leiterdurchmessers beträgt. Hier wird auf einen n-fachen Abstand abgestellt mit n = 2 bis 10, bevorzugt n = 2 bis 5.

Bei einer bevorzugten Ausgestaltung der Erfindung weist die erste Teilfläche einen Rastvorsprung oder eine Rastnase und die zweite Teilfläche eine hierzu komplementäre Rastausnehmung auf, um nach dem Einführen des Leiters beide Teilflächen formschlüssig in einer Position zueinander zu halten, die ein leichtes Einbringen von Spannschraube oder Spannbolzen ermöglicht. Hierdurch wird die Montage der Bügelklemme am Leiter erleichtert. Es kann also durch diese technische Möglichkeit die Bügelklemme auf dem Leiter oder Seil vorpositioniert werden und es ist ein leichteres Anschrauben der Klemme und das Anbringen der Blitzstromableitung möglich.

Zum Erreichen der notwendigen Flächenpressung ist der lichte Innendurchmesser im Klemmbereich kleiner als der Durchmesser des zu klemmenden Leiters gewählt.

Die Teilflächen der Anschlussfläche führen im Endmontagezustand der Anordnung in ihrer gedachten Verlängerung in Richtung Klemmbereich nicht durch den Mittelpunkt oder die Längsachse des zu klemmenden Leiters. Der Abstand der gedachten Verlängerung jeder Teilfläche zum Mittelpunkt oder der Längsachse des zu klemmenden Leiters ist unter dem eingangs erwähnten Symmetrieaspekt im Wesentlichen gleich groß.

Im Bereich der Teilflächen der Anschlussfläche sind bei einer Ausführungsform der Erfindung jeweils zwei beabstandete Bohrungen oder Ausnehmungen befindlich.

Diese Bohrungen können auf einer gemeinsamen Achse liegen, die parallel zur Längsachse des im Klemmbereich aufgenommenen Leiters verläuft.

Im Bereich des Mindestabstands zwischen dem Übergang und den Bohrungen liegen die Teilflächen der Anschlussfläche dicht aneinander und in einer Position gleichmäßig beabstandet vom zu klemmenden Leiter, so dass Seilgleiter oder Seilschlitten ungehindert über die Bügelklemme bewegbar sind.

Die Erfindung soll nachstehend anhand eines Ausführungsbeispiels sowie unter Zuhilfenahme von Figuren näher erläutert werden.

Hierbei zeigen:
- Fig. 1: eine Darstellung der erfindungsgemäßen Bügelklemme mit bereits eingeführtem seilförmigen Leiter, jedoch noch in geöffneter Position der hier voneinander beabstandeten Teilflächen;
- Fig. 2: eine Darstellung ähnlich derjenigen nach Fig. 1, jedoch bereits mit ausgeführter Verrastung der beiden Teilflächen über Rastnase und Rastausnehmung zum Zweck der Montageerleichterung und der Vorpositionierung auf dem seilförmigen Leiter;
- Fig. 3: eine Darstellung der Bügelklemme mit angeschlossenem Blitzstromableiter, wobei zwei Spannschrauben Verwendung finden, und

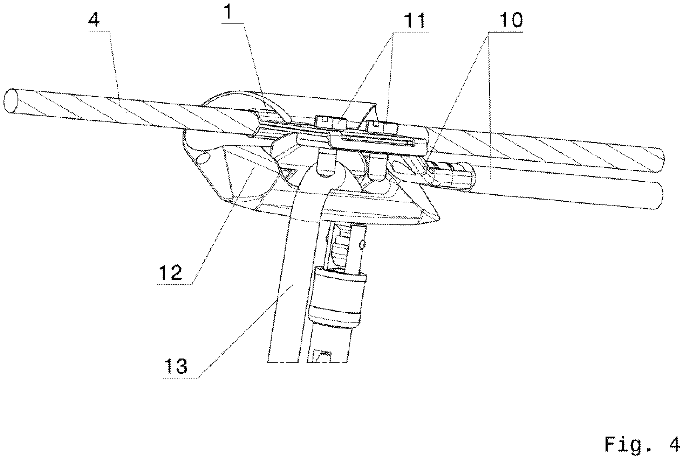

- Fig. 4: eine Darstellung ähnlich derjenigen nach Fig. 3 mit Seilgleiter und eingehängtem Karabinerhaken im Bereich der Führung des Seilgleiters über die Mindestabstandsfläche der Bügelklemme.

Die erfindungsgemäße Bügelklemme gemäß dem Ausführungsbeispiel und den Figuren besteht aus einem Metallstanz-Biegeteil, welches einen Klemmbereich 1 umfasst. Der Klemmbereich 1 geht in eine Anschlussfläche über, die aus zwei Teilflächen 2 und 3 besteht.

Der Klemmbereich 1 folgt im Wesentlichen der Kontur eines zu klemmenden Leiters, im gezeigten Beispiel eines Seiles 4 eines Absturzsicherungssystems.

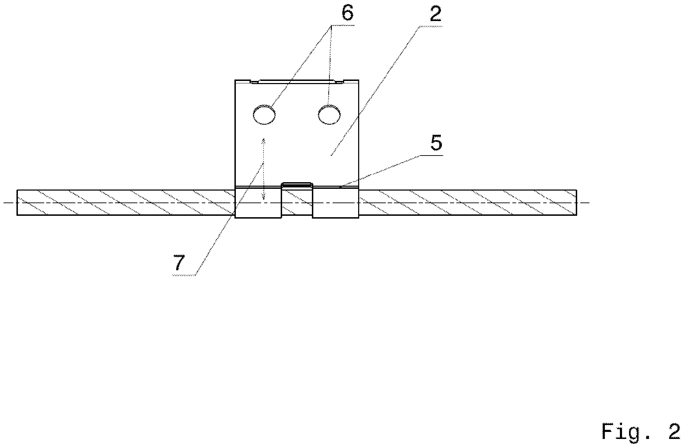

Die Teilflächen 2, 3 erstrecken sich radial vom Klemmbereich 1 weg und liegen im Endmontagezustand übereinander (siehe Fig. 2).

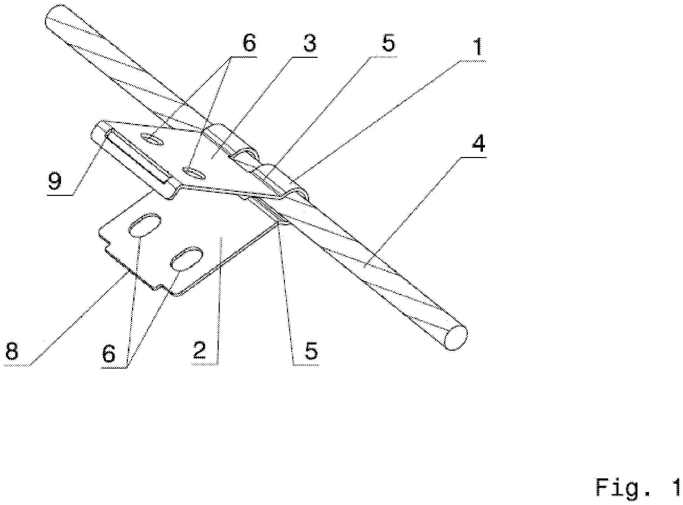

Im Zustand zum Einführen des Seiles 4 (Fig. 1) weisen die Teilflächen 2, 3 einen Abstand voneinander auf, um den zu klemmenden Leiter, d.h. das Seil 4 einzubringen.

Wie aus der Darstellung nach Fig. 1 ersichtlich, umschließt der Klemmbereich 1 das Seil 4. Der Klemmbereich 1 und der Bereich eines Übergangs 5 zu den Teilflächen 2, 3 ist symmetrisch ausgebildet.

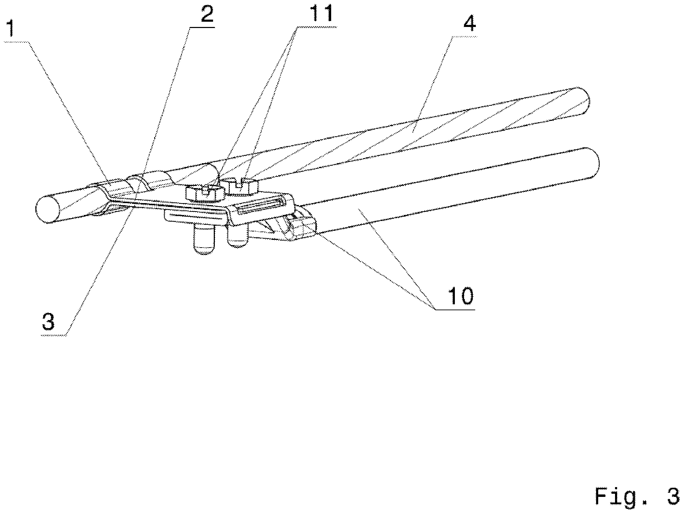

Weiterhin sind in den Teilflächen 2, 3 zwei beabstandete Bohrungen 6 eingebracht, die der Aufnahme von Spannmitteln, z.B. Schrauben (siehe Fig. 3) dienen.

Zwischen den Bohrungen 6 und dem Übergang 5 bzw. der Längsachse des Klemmbereichs 1 ist ein radialer Mindestabstand 7 vorgesehen, der das n-fache des Durchmessers des Leiters oder Seiles 4 beträgt.

Die erste Teilfläche 2 umfasst gemäß dem Ausführungsbeispiel eine Rastnase 8. Die zweite Teilfläche 3 weist eine hierzu komplementäre Rastausnehmung 9 auf, um nach dem Einführen des Seiles 4 beide Teilflächen 2, 3 formschlüssig in einer Position zueinander zu halten, die ein leichtes Einbringen der erwähnten Spannschrauben oder Spannbolzen ermöglicht, wie dies in der Fig. 2 dargestellt ist.

Wie in der Fig. 3 dargestellt, kann die gemäß Fig. 2 vorpositionierte Bügelklemme nunmehr mit einem Blitzstromableiteranschluss in Form eines Kabelschuhs 10 durch Schrauben 11 verbunden werden. Dabei wird gleichzeitig für die notwendige Flächenpressung zwischen Klemmbereich 1 und Seil 4 gesorgt.

Durch den Mindestabstand 7 wie erläutert kann ein Seilgleiter bzw. Seilschlitten 12, ohne diesen zu öffnen, über die Bügelklemme geführt werden, so dass die volle Funktion einer Absturzsicherung, deren Bestandteil das Seil 4 ist, gewährleistet bleibt. Gemäß der Darstellung nach Fig. 2 sind die Bohrungen 6 auf einer gemeinsamen Achse liegend, die parallel zur Längsachse des im Klemmbereich aufgenommenen Leiters bzw. Seiles 4 verläuft.

Der Mindestabstand 7 kann im Bereich des 2- bis 10-fachen, bevorzugt 2- bis 5-fachen des Leiterdurchmessers liegen, so dass einerseits der Seilgleiter bzw. Seilschlitten ungestört geführt wird und andererseits ausreichend Klemmkraft auf das Seil aufgebracht wird, um die geforderte Blitzstromtragfähigkeit zu erfüllen.

Der Klemmbereich ist vom Grundsatz her so ausgelegt, dass das Seil nahezu 360° umfangsseitig umschlossen und geklemmt wird, um den Forderungen der Stromtragfähigkeit zu genügen.

Die Verrasterung der Klemme ermöglicht ein von Hand Vorpositionieren auf dem Seil, so dass eine Montageerleichterung beim Anschluss der Blitzstromableitung an der Klemme gegeben ist.

### Bezugszeichenliste

- 1: Klemmbereich
- 2, 3: Teilfläche
- 4: Seil oder Leiter
- 5: Übergang
- 6: Bohrung
- 7: Mindestabstand
- 8: Rastnase
- 9: Rastausnehmung
- 10: Kabelschuh
- 11: Schraube
- 12: Seilgleiter / Seilschlitten
- 13: Karabinerhaken

## Patentansprüche

1. Einstückige blitzstromtragfähige Bügelklemme, bestehend aus einem Klemmbereich (1) und einer Anschlussfläche mit mindestens einer Bohrung (6), wobei der Klemmbereich (1) im Wesentlichen der Kontur des zu klemmenden Leiters, insbesondere eines Seils (4) eines Absturzsicherungssystems entspricht und sich die Anschlussfläche radial vom Klemmbereich (1) weg erstreckt, sowie weiterhin die Anschlussfläche zwei übereinander liegende Teilflächen (2, 3) umfasst, die voneinander einen Abstand aufweisen, um einerseits den zu klemmenden Leiter einzuführen sowie andererseits mittels Spannschraube oder Spannbolzen (11) den Leiter im Klemmbereich zu fixieren, wobei der Klemmbereich (1) zum Umschließen des Leiters (4) einschließlich eines jeweiligen Übergangs (5) zu den Teilflächen (2, 3) der Anschlussfläche symmetrisch ausgebildet ist,
**dadurch gekennzeichnet, dass**
die erste Teilfläche (2) einen Rastvorsprung oder eine Rastnase (8) und die zweite Teilfläche (3) eine hierzu komplementäre Rastausnehmung (9) aufweist, um nach dem Einführen des Leiters (4) beide Teilflächen (2, 3) formschlüssig in einer Position zueinander zu halten, die ein leichtes Einbringen von Spannschrauben oder Spannbolzen (11) ermöglicht.

2. Bügelklemme nach Anspruch 1,
**dadurch gekennzeichnet, dass**
zwischen der mindestens einen Bohrung (6) in der Anschlussfläche und dem Übergang (5) ein radialer Mindestabstand (7) vorgesehen ist, der das n-fache des Leiterdurchmessers beträgt.

3. Bügelklemme nach einem der vorangegangenen Ansprüche,
**dadurch gekennzeichnet, dass**
der lichte Innendurchmesser im Klemmbereich (1) kleiner als der Durchmesser des zu klemmenden Leiters (4) ist.

4. Bügelklemme nach einem der vorangegangenen Ansprüche,
**dadurch gekennzeichnet, dass**
die Teilflächen (2, 3) der Anschlussfläche in ihrer gedachten Verlängerung in Richtung Klemmbereich (1) nicht durch den Mittelpunkt oder die Längsachse des geklemmten Leiters (4) führen.

5. Bügelklemme nach Anspruch 4,
**dadurch gekennzeichnet, dass**
der Abstand der gedachten Verlängerung jeder Teilfläche (2, 3) zum Mittelpunkt oder der Längsachse des geklemmten Leiters (4) im Wesentlichen gleich groß ist.

6. Bügelklemme nach einem der vorangegangenen Ansprüche,
**dadurch gekennzeichnet, dass**
im Bereich der Teilflächen (2, 3) der Anschlussfläche jeweils zwei beabstandete Bohrungen (6) oder Ausnehmungen befindlich sind.

7. Bügelklemme nach Anspruch 6,
**dadurch gekennzeichnet, dass**
die Bohrungen (6) auf einer gemeinsamen Achse liegen, die parallel zur Längsachse des im Klemmbereich (1) aufgenommenen Leiters (4) verläuft.

8. Bügelklemme nach einem der Ansprüche 2 bis 7,
**dadurch gekennzeichnet, dass**
im Bereich des Mindestabstands ein Seilgleiter oder Seilschlitten (12) führbar ist.

## Claims

1. Integral lightning-resistant frame clamp consisting of a clamping region (11) and a connecting surface having at least one bore (6), wherein the clamping region (1) substantially corresponds to the contour of the conductor to be clamped, in particular a cable (4) of a fall protection system, and the connecting surface extends radially away from the clamping region (1), and the connecting surface further comprises two superimposed partial areas (2, 3) that have a distance from each other so as to introduce the conductor to be clamped, on the one hand, and to fix the conductor, on the other, by means of a clamping screw or clamping bolt (11) in the clamping region, wherein the clamping region (1) is symmetrically formed for enclosing the conductor (4) including a respective transition (5) to the partial areas (2, 3),
**characterized in that**
the first partial area (2) has a latching projection or a latching lug (8), and the second partial area (3) has a latching recess (9) that is complementary thereto, so as to keep both partial areas (2, 3), after the introduction of the conductor (4), in a form-fit manner in a mutual position which enables clamping screws or clamping bolts (11) to be easily inserted.

2. Frame clamp according to claim 1,
**characterized in that**
between the at least one bore (6) in the connecting surface and the transition (5), a radial minimum distance (7) is provided which is n times the diameter of the conductor.

3. Frame clamp according to anyone of the preceding claims,
**characterized in that**
the clear inner diameter in the clamping region (1) is smaller than the diameter of the conductor (4) to be clamped.

4. Frame clamp according to anyone of the preceding claims,
**characterized in that**
the partial areas (2, 3) of the connecting surface, in their imaginary prolongation toward the clamping region (1), do not extend through the central point or the longitudinal axis of the clamped conductor (4).

5. Frame clamp according to claim 4,
**characterized in that**
the distance of the imaginary prolongation of each partial area (2, 3) to the central point or the longitudinal axis of the clamped conductor (1) is of substantially equal size.

6. Frame clamp according to anyone of the preceding claims,
**characterized in that**
two spaced bores (6) or recesses each are situated in the region of the partial areas (2, 3) of the connecting surface.

7. Frame clamp according to claim 6,
**characterized in that**
the bores (6) lie on a common axis that runs in parallel to the longitudinal axis of the conductor (4) received in the clamping region (1).

8. Frame clamp according to anyone of claims 2 to 7,
**characterized in that**
a cable slide or cable carriage (12) may be guided in the region of the minimum distance.

## Revendications

1. Borne à pince d'une seule pièce pouvant supporter les courants dûs à la foudre, constituée par une zone de serrage (1) et par une surface de raccordement avec au moins un perçage (6), dans laquelle la zone de serrage (1) correspond sensiblement au contour du conducteur à serrer, en particulier d'un câble (4) d'un système de protection antichute, et la surface de raccordement s'étend radialement en éloignement de la zone de serrage (1), et la surface de raccordement comprend en outre deux surfaces partielles superposées (2, 3) qui présentent une distance entre elles pour introduire d'une part le conducteur à serrer et pour fixer d'autre part le conducteur dans la zone de serrage au moyen d'une vis de serrage ou d'un boulon de serrage (11),
dans laquelle, pour enfermer le conducteur (4), y compris une transition respective (5) vers les surfaces partielles (2, 3) de la surface de raccordement, la zone de serrage (1) est réalisée symétrique,
**caractérisée en ce que**
la première surface partielle (2) comprend une saillie d'enclenchement ou un bec d'enclenchement (8) et la seconde surface partielle (3) comprend un évidement d'enclenchement (9) complémentaire à celle-ci/celui-ci, afin de maintenir, après introduction du conducteur (4), les deux surfaces partielles (2, 3) par coopération de formes dans une position l'une par rapport à l'autre qui permet une insertion aisée de vis de serrage ou de boulons de serrage (11).

2. Borne à pince selon la revendication 1,
**caractérisée en ce que**
entre ledit au moins un perçage (6) dans la surface de raccordement et la transition (5), il est prévu une distance minimale radiale (7) qui est n fois plus élevée que le diamètre du conducteur.

3. Borne à pince selon l'une des revendications précédentes,
**caractérisée en ce que**
le diamètre intérieur libre dans la zone de serrage (1) est inférieur au diamètre du conducteur à serrer (4).

4. Borne à pince selon l'une des revendications précédentes,
**caractérisé en ce que**
les surfaces partielles (2, 3) de la surface de raccordement, vues dans leur prolongement imaginaire en direction de la zone de serrage (1), ne passent pas par le centre ou par l'axe longitudinal du conducteur serré (4).

5. Borne à pince selon la revendication 4,
**caractérisé en ce que**
la distance du prolongement imaginaire de chaque surface partielle (2, 3) par rapport au centre ou à l'axe longitudinal du conducteur serré (4) est sensiblement égale.

6. Borne à pince selon l'une des revendications précédentes,
**caractérisé en ce que**
dans la zone des surfaces partielles (2, 3) de la surface de raccordement, il est prévu deux perçages (6) ou évidements respectifs écartés l'un de l'autre.

7. Borne à pince selon la revendication 6,
**caractérisé en ce que**
les perçages (6) se trouvent sur un axe commun qui s'étend parallèlement à l'axe longitudinal du conducteur (4) reçu dans la zone de serrage (1).

8. Borne à pince selon l'une des revendications 2 à 7,
**caractérisé en ce que**
un coulisseau à câble ou un chariot à câble (12) peut être guidé dans la zone de la distance minimale.
